Europäisches Patentamt

European Patent Office

Office européen des brevets

(11) Publication number: **0 142 431**
**B1**

(12) **EUROPEAN PATENT SPECIFICATION**

(45) Date of publication of patent specification: **10.05.89**

(21) Application number: **84402237.6**

(22) Date of filing: **07.11.84**

(51) Int. Cl.⁴: **E 04 H 3/20, F 16 L 55/04**

(54) A shock damper for automatic swimming pool cleaning apparatus.

(30) Priority: **11.11.83 ZA 838432**

(43) Date of publication of application:
**22.05.85 Bulletin 85/21**

(45) Publication of the grant of the patent:
**10.05.89 Bulletin 89/19**

(84) Designated Contracting States:
**AT BE CH DE FR GB IT LI LU NL SE**

(56) References cited:
**DE-A-2 808 135**
**DE-C- 315 487**
**FR-A- 830 157**
**FR-A-2 471 525**
**US-A-3 162 213**
**US-A-4 243 253**

(73) Proprietor: **Chauvier, Daniel Jean Valere Denis**
**28 Cullinan Road Sharon Park**
**Dunnottar Transvaal (ZA)**

(72) Inventor: **Chauvier, Daniel Jean Valere Denis**
**28 Cullinan Road Sharon Park**
**Dunnottar Transvaal (ZA)**

(74) Representative: **CABINET BONNET-THIRION**
**95 Boulevard Beaumarchais**
**F-75003 Paris (FR)**

Courier Press, Leamington Spa, England.

## Description

This present invention relates to a damping device for damping hydraulic shocks generated by automatic swimming pool cleaning apparatus.

In DE-A-2 808 135 there is disclosed an expansion joint connectable in a pipe line. The joint comprises two end pieces and a metal bellows extending between the end pieces. Rings of elastic material are disposed in the folds of the bellows on the inside, the outside or on both sides thereof. A cylindrical elastic damper of larger diameter is disposed around the tubular member. The combination of the rings of the elastic material and the cylindrical elastic damper serve to damp oscillations in the line which are to a source of vibrations and noise. The joint is longitudinally contracted by tensioning bolts which extend alternately between one end piece and the axially remote one of the damper annular outer flanges.

Owing to the longitudinal contraction of the joint the end pieces do not admit of any substantial movement. The longitudinal contraction of the bolts therefore defines the operating configuration of the joint. It is not, however, adapted extend or contract in response to the various pressure deviations sufficiently to solve the problems experience in automatic swimming pool cleaning apparatus.

According to the invention, there is provided a damping device for damping hydraulic shocks generated by an automatic swimming pool cleaning apparatus, which includes a second end member defining an outlet, a tubular member secured at one end to said first end member and at its other end to the second end member in a fluid tight manner, characterised in that the first end member is connectable to a swimming pool cleaning apparatus, the second end member is connectable to a flexible hose, the tubular member being of flexible material longitudinally extensible and contractable so as to define with the end members a variable volume chamber, a mechanical spring being disposed within the tubular member for urging the first and second end members apart so that the device, in use, is capable to extending and contracting in response to pressure variations.

In order to inhibit radial collapsing of the tubular member, strengthening rings may be located within the tubular member.

The tubular member may be secured to the end members in a substantially fluid tight manner so as to define therewith a variable volume chamber. It will be appreciated that, in use, water flows through the device, and any variations in the rate of flow of water will cause the volume of the chamber to vary. Thus the device will tend to smooth the flow of water through a hose to which it is connected.

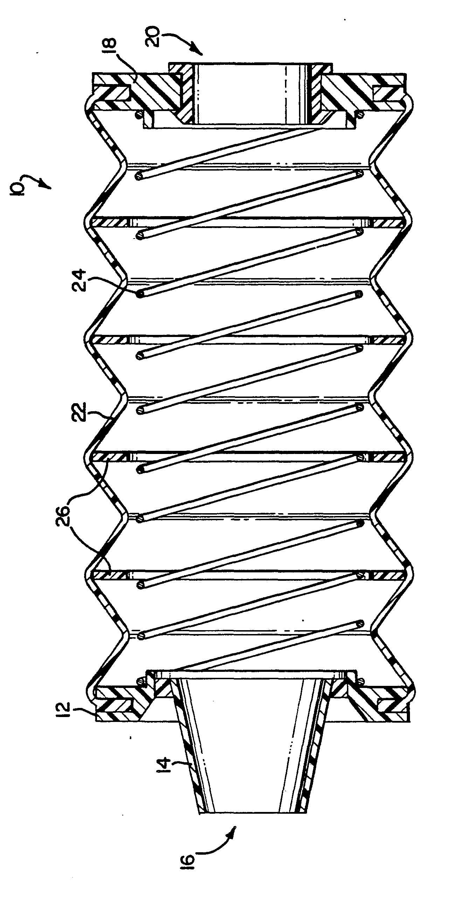

The invention is now described by way of an example, with reference to the accompanying drawing which shows a longitudinally sectional view of a damping device in accordance with the invention.

Referring to the drawing, a device for damping hydraulic shocks generated by automatic swimming pool cleaning apparatus is designated generally by reference numeral 10. The device 10 has a first end member 12 which has a spigot formation 14 secured thereto and which defines an inlet aperture 16. The spigot formation 14 is engageable with an automatic swimming pool apparatus (not shown). The device 10 has a second end member 18 which in turn defines an outlet 20 which is connectable to an end of a flexible suction hose (also not shown) used with the cleaning apparatus.

A flexible tubular member 22 is secured at one end to the first end member 12 and its other end to the second end member 18. A stainless steel spring 24 is housed within and spaced transversely inwardly of the tubular member 22 and bears against the end members 12 and 18 to urge them apart. A number of reinforcing rings 26 are also located within the tubular member 22 and serve to resist radial collapsing of the tubular member 22 whilst permitting longitudinal contractions and expansions.

In use, as the rate of flow of water through the device 10 varies the resulting pressure variations will cause the end members 12 and 18 to move towards and away from one another, thereby smoothing the flow of water into the suction hose connected to the end member 18. The applicant has found that with devices such as that described above automatic swimming pool apparatus which utilise the variation in rate of flow of water therethrough to displace the apparatus, operate better.

## Claims

1. A damping device (10) for damping hydraulic shocks generated by an automatic swimming pool cleaning apparatus comprising a first end member (12) defining an inlet (16), a second end member (18) defining an outlet (20), a tubular member (22) secured at one end to said first end member (12) and at its other end to the second end member (18) in a fluid tight manner, characterised in that the first end member is connectable to a swimming pool cleaning apparatus, the second end member is connectable to a flexible hose, the tubular member (22) being of flexible material to be longitudinally extensible and contractable so as to define with the end members a variable volume chamber, a mechanical spring (24) being disposed within the tubular member for urging the first and second end members apart so that the device, in use, is capable of extending and contracting in response to pressure variations.

2. The damping device claimed in Claim 1, characterised in that the tubular member has a strengthening means (26) for inhibiting inward deformation thereof.

3. A damping device according to claim 1 or 2, characterised in that the mechanical spring (24) bears on one end against the first end member and on the other end against the second end member.

4. A damping device according to claim 1, 2 or 3, characterised in that mechanical spring (24) is spaced transversely inwardly of said tubular member.

**Patentansprüche**

1. Dämpfungsvorrichtung (10) zum Dämpfen von durch eine automatische Schwimmbadreinigungsvorrichtung hervorgerufenen hydraulischen Stößen, mit einem ersten Endstück (12), das einen Einlaß (16) ausbildet, einem zweiten Endstück (18), das einen Auslaß (20) ausbildet, und einem rohrförmigen Teil (22), das an einem Ende an dem ersten Endstück (12) und an seinem anderen Ende an dem zweiten Endstück (18) in fluiddichter Weise befestigt ist, dadurch gekennzeichnet, daß das erste Endstück mit einer Schwimmbadreinigungsvorrichtung verbindbar ist, daß das zweite Endstück mit einem flexiblen Schlauch verbindbar ist, daß das rohrförmige Teil (22) aus flexiblem Material besteht, so daß es in Längsrichtung dehnbar und zusammenziehbar ist, um mit den Endstücken eine Kammer mit variablem Volumen auszubilden, und daß innerhalb des rohrförmigen Teils eine mechanische Feder (24) angeordnet ist, um das erste und das zweite Endstück auseinanderzudrücken, so daß sich die Vorrichtung im Gebrauch in Abhängigkeit von Druckänderungen ausdehnen und zusammenziehen kann.

2. Dämpfungsvorrichtung gemäß Anspruch 1, dadurch gekennzeichnet, daß das rohrförmige Teil eine Verstärkungseinrichtung (26) zum Verhindern einer nach innen gerichteten Deformation des rohrförmigen Teils aufweist.

3. Dämpfungsvorrichtung gemäß Anspruch 1 oder 2, dadurch gekennzeichnet, daß sich die mechanische Feder (24) an einem Ende gegen das erste Endstück und am anderen Ende gegen das zweite Endstück abstützt.

4. Dämpfungsvorrichtung gemäß Anspruch 1, 2 oder 3, dadurch gekennzeichnet, daß die mechanische Feder (24) schräg nach innen von dem rohrförmigen Teil beabstandet ist.

**Revendications**

1. Dispositif amortisseur (10) servant à amortir des chocs hydrauliques produits par un dispositif de nettoyage automatique de piscines, comprenant un premier élément d'extrémité (12) définissant une entrée (16), un second élément (18) définissant une sortie (20), un élément tubulaire (22) fixé, par une extrémité, audit premier élément d'extrémité (12) et, par son autre extrémité, au second élément d'extrémité (18), d'une manière étanche aux fluides, caractérisé en ce que le premier élément d'extrémité peut être raccordé à un dispositif de nettoyage d'une piscine, le second élément d'extrémité peut être racordé à un tuyau flexible, l'élément tubulaire (22) étant constitué en un matériau flexible pouvant être étiré et contracté longitudinalement de manière à définir, avec les éléments d'extrémité, une chambre de volume variable, un ressort mécanique (24) disposé à l'intérieur de l'élément tubulaire afin d'écarter l'un de l'autre les premier et second éléments d'extrémité de manière que, en cours d'utilisation, le dispositif amortisseur soit à même de se déployer et de se contracter en réponse à des variations de pression.

2. Dispositif amortisseur selon la revendication 1, caractérisé en ce que l'élément tubulaire comporte des moyens de rigidification (26) servant à empêcher une déformation de cet élément vers l'intérieur.

3. Dispositif amortisseur selon la revendication 1 ou 2, caractérisé en ce que le ressort mécanique (24) prend appui, par une extrémité, contre le premier élément d'extrémité, et par son autre extrémité, contre le second élément d'extrémité.

4. Dispositif amortisseur selon la revendication 1, 2 ou 3, caractérisé en ce que le ressort mécanique (24) est écarté transversalement, en direction de l'intérieur, par rapport audit élément tubulaire.